# EUROPÄISCHE PATENTANMELDUNG

(11) **EP 2 108 858 A2**
(43) Veröffentlichungstag der Anmeldung: **14.10.2009**
(21) Anmeldenummer: 09157470.7
(22) Anmeldetag: 07.04.2009
(51) Int. Cl.: F16F 9/512

(54) **Schwingungsdämpfer mit amplitudenabhängiger Dämpfkraft**

(30) Priorität: 10.04.2008 DE 102008001106
(71) Anmelder: ZF Friedrichshafen AG, 88038 Friedrichshafen (DE)
(72) Erfinder: Hammer, Thomas, 97653, Bischofsheim (DE)

(57) **Zusammenfassung**

Schwingungsdämpfer mit amplitudenabhängiger Dämpfkraft, umfassend einen Zylinder, in dem eine Kolbenstange axial beweglich angeordnet ist, an der ein Gehäuse angebracht ist, das zwei dämpfmediumgefüllte Arbeitsräume trennt, wobei in dem Gehäuse zwei sich in ihrer Größe gegenläufig sich verändernden Arbeitskammern durch ein axial bewegliches Trennelement bestimmt werden, an dem Dämpfventile ausgeführt sind, die in beiden Bewegungsrichtungen des Trennelements eine Dämpfkraft erzeugen, wobei die Arbeitskammern jeweils eine Öffnung zum einem Arbeitsraum aufweisen, und das Trennelement die Öffnungen als Schließventil ansteuert und mindestens eine Arbeitskammer im Gehäuse ein weiteres Dämpfventil aufweist, wobei in einem ersten Kolbenstangenhubbereich aus einem Arbeitsraum Dämpfmedium in eine Arbeitskammer verdrängt und dadurch das Trennelement axial verschoben wird, wobei über die Verschiebebewegung des Trennelements mindestens drei Dämpfkraftstufen erreichbar sind.

## Beschreibung

Die Erfindung betrifft einen Schwingungsdämpfer mit amplitudenabhängiger Dämpfkraft gemäß dem Oberbegriff von Patentanspruch 1.

Aus der gattungsbildenden DE 103 21 351 A1 ist ein Schwingungsdämpfer mit amplitudenabhängiger Dämpfkraft bekannt, der ein Gehäuse umfasst, in dem ein mit Dämpfventilen bestücktes Trennelement axial beweglich angeordnet ist. Bei einer Kolbenstangenbewegung strömt das gesamte Dämpfmedium aus einem Arbeitsraum des Zylinders in das Gehäuse ein, das Trennelement um einen definierten Weg verschieben, wobei nur eine geringe Dämpfkraft auftritt. Ein Elastomerelement verhindert einen allzu harten Anschlag des Trennelements in seiner Endposition, bei der das Dämpfventil im Trennelement öffnet. Damit ist jedoch ein vergleichsweise großer Dämpfkraftsprung verbunden.

Die DE 10 2006 008 675 B3 betrifft ebenfalls einen Schwingungsdämpfer mit amplitudenabhängiger Dämpfkraft, bei dem jedoch zwei parallele Strömungswege die Dämpfkraft steuern. Ein erster Strömungsweg führt durch ein an der Kolbenstange befestigtes Gehäuse mit zwei Arbeitkammern, die von einem vollständig geschlossenen Trennkolben bestimmt werden. Am Ende der Trennkolbenbewegung verschließt dieser eine Abflussöffnung in Richtung eines Arbeitsraums. Diese Verschließbewegung führt zu einem weichen Dämpfkraftübergang. Bei einer weiteren Kolbenstangenbewegung setzt ein Kolbenventil ein, das in einem zweiten Strömungsweg liegt. Wenn die Kolbenstange ihre Bewegungsrichtung ändert, dann öffnet ein Rückschlagventil eine Zuströmöffnung in Richtung einer sich vergrößernden Arbeitskammer im Gehäuse.

Die Aufgabe der vorliegenden Erfindung besteht darin, einen weichen Übergang zwischen einem Dämpfkraftniveau im Rahmen der amplitudenabhängigen Dämpfung und einem sich daran anschließenden Hubbereich der Kolbenstange zu erreichen.

Erfindungsgemäß wird die Aufgabe dadurch gelöst, dass das Trennelement die Öffnungen als Schließventil ansteuert und mindestens eine Arbeitskammer im Gehäuse ein weiteres Dämpfventil aufweist, wobei in einem ersten Kolbenstangenhubbereich aus einem Arbeitsraum Dämpfmedium in eine Arbeitskammer verdrängt und dadurch das Trennelement axial verschoben wird, wobei aus der anderen Arbeitskammer Dämpfmedium in den daran angeschlossenen Arbeitsraum verdrängt wird, wobei das Schließventil am Ende des ersten Kolbenstangenhubbereiches verschlossen wird, und bei einem weiteren Kolbenstangenhub das weitere Dämpfventil aufgrund der weiteren axialen Bewegung des Trennelements und der damit verbundenen Verdrängung von Dämpfmedium aus der Arbeitskammer in den Arbeitsraum öffnet und am Ende des maximalen Verschiebeweges des Trennelementes und fortgesetzter Kolbenstangenbewegung Dämpfmedium aus einem Arbeitsraum über die angeschlossene Arbeitskammer durch ein Dämpfventil des Trennelements in die andere Arbeitskammer und im weiteren Strömungsweg über das geöffnete weitere Dämpfventil in den anderen Arbeitsraum fließt.

Durch die mehrstufige Dämpfkrafterhöhung im Rahmen einer Kolbenstangenbewegung tritt kein plötzlicher Dämpfkraftanstieg auf. Diese Dämpfkraftcharakteristik wird als angenehm empfunden. Man kann z. B. den ersten Hubbereich praktisch ohne Dämpfkraft auslegen und erreicht trotzdem eine Abstützung des Fahrzeugaufbaus bei größeren Federungsbewegungen.

In weiterer vorteilhafter Ausgestaltung weist der Schwingungsdämpfer in Einfahr- und Ausfahrrichtung eine amplitudenabhängige Dämpfkraft auf.

Bei einer Ausführungsform ist die Öffnung radial im Gehäuse im Bereich des Verschiebewegs des Trennelements ausgeführt. Damit bildet das Trennelement mit der Öffnung ein Schieberventil, das in Abhängigkeit der axialen Position des Trennelements eine kontinuierliche Drosselung der Verschiebebewegung des Trennelements bewirkt und damit ein Anschlaggeräusch verhindert.

Im Hinblick auf eine komfortorientierte Dämpfkraftcharakteristik weist das weitere Dämpfventil mindestens einen Durchlasskanal mit einer Ventilscheibenbestückung auf. Durch eine Auswahl der Ventilscheibenbestückung kann die Dämpfkraftcharakteristik in großem Maße den fahrzeugspezifischen Bedürfnissen angepasst werden.

Des Weiteren ist vorgesehen, dass die Dämpfventile im Trennelement mindestens einen Durchtrittskanal mit mindestens einer den Durchtrittskanal in Ausströmrichtung zumindest teilverschließenden Ventilscheibe umfassen, wobei die Dämpfventile im Trennelement eine härtere Dämpfkraftcharakteristik aufweisen als das weitere Dämpfventil im Gehäuse.

Um eine insgesamt kompakte Baueinheit für die Dämpfventile des Schwingungsdämpfers zu erreichen, wird das weitere Dämpfventil im Gehäuse von einem Deckel des Gehäuses gebildet.

Bei einer Umkehrung der Kolbenstangenbewegung kann die Arbeitskammer sehr schnell und widerstandsfrei mit Dämpfmedium gefüllt werden, da das Gehäuse mindestens ein in Einströmrichtung in das Gehäuse sich öffnende Rückschlagventil aufweist.

Bei einer Alternativvariante weist das Trennelement ein Ventilelement aufweist, das die Öffnung im Gehäuse verschließt und eine Relativbewegung des Ventilelements zum Trennelement zulässt.

Eine Bauform des Ventilelements besteht darin, dass das Ventilelement von einem axial beweglichen Ventilbolzen gebildet wird. Dabei ist der Ventilbolzen federnd zum Trennelement gelagert.

Die Funktion des Ventilelements soll für beide Verschiebebewegungen des Trennelements zur Verfügung stehen. Eine einfache Lösung besteht darin, dass sich beiderseits des Trennelements ein Ventilelement erstreckt.

In weiterer vorteilhafter Ausgestaltung stützt sich die Ventilscheibe des Trennelements an einer Rückseite des Ventilelements ab. Eine weitere Anschlagscheibe für die Ventilscheibe dürfte in vielen Fällen überflüssig sein.

Man kann zur Steigerung der Dämpfkraft vorsehen, dass dem Gehäuse in einer parallelen Strömungsverbindung zwischen den Arbeitsräumen zu den Öffnungen im Gehäuse ein drittes Dämpfventil parallel geschaltet ist, das ab einer definierten Kolbenstangengeschwindigkeit öffnet. Damit lassen sich insgesamt vier Dämpfkraftniveaus erreichen.

Gemäß einem vorteilhaften Unteranspruch weist das Gehäuse einen Ringsteg auf, in dem Durchgangsöffnungen mit Ventilscheiben das dritte Dämpfventil bilden.

Für einen weichen Anstieg der Dämpfkraft ist vorgesehen, dass zu dem Trennelement ein Bypass besteht, der auch bei einer geschlossenen Öffnung auf einem definierten Verschiebeweg des Trennelements beide Arbeitskammern des Gehäuses miteinander verbindet. Wenn eine der Öffnungen im Gehäuse verschlossen ist, dann muss das verdrängte Dämpfmedium durch eines der Dämpfventile des Gehäuses. Ohne Bypass würde das Dämpfmedium in der sich vergrößernden Arbeitskammer auf das Trennelement wirken, das das Dämpfmedium in der komprimierten Arbeitskammer durch das Dämpfventil im Gehäuse vom Druck verdrängt. Damit gäbe es eine stärkere Abhängigkeit der Öffnungsbewegung der Dämpfventile im Trennkolben und der Dämpfventile im Gehäuse. Durch den Bypass kann das Dämpfmedium den Trennkolben innerhalb eines definierten Verschiebebereichs umströmen und damit eine striktere Trennung der Dämpfventilfunktion erreichen.

Eine besonders einfache Bauart zeichnet sich dadurch aus, dass der Bypass von mindestens einer Längsnut im Gehäuse gebildet wird.

Anhand der folgenden Figurenbeschreibung soll die Erfindung näher erläutert werden.

Es zeigt:
- Fig. 1: Schnittdarstellung von einem Schwingungsdämpfer mit Schieberventil
- Fig. 2: Schnittdarstellung von einem Schwingungsdämpfer mit Sitzventil
- Fig. 3: Vierstufiger Schwingungsdämpfer

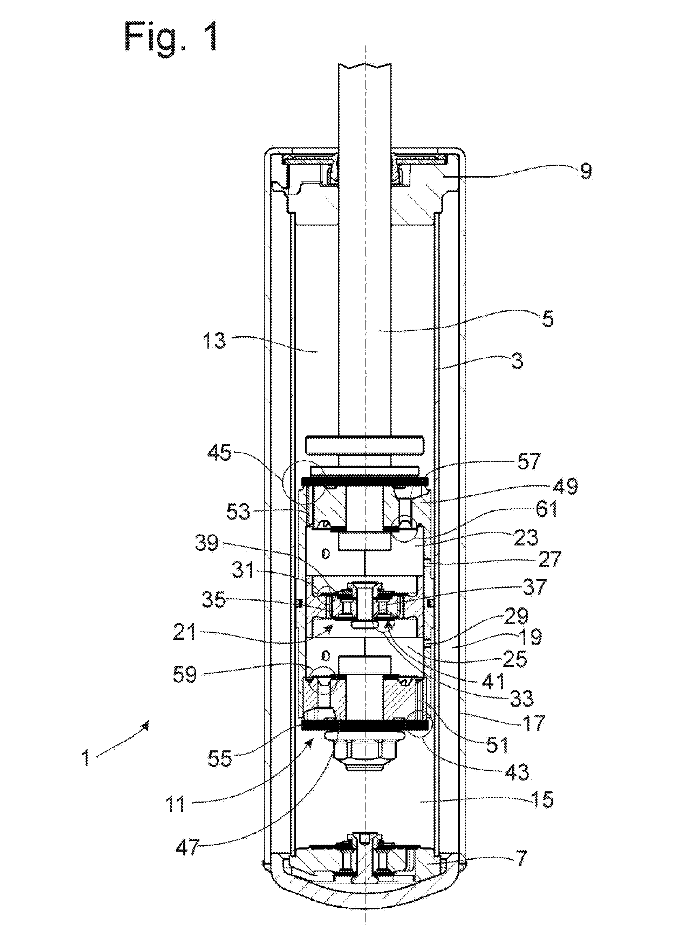

Die Fig. 1 zeigt einen Schwingungsdämpfer 1 mit amplitudenabhängiger Dämpfkraft. In einem Zylinder 3 ist eine Kolbenstange 5 axial beweglich angeordnet. Ein Bodenventilkörper 7 und eine Kolbenstangenführung 9 dienen als Abschluss An der Kolbenstange 5 ist ein Gehäuse 11 befestigt, das den Zylinder 3 in einen kolbenstangenseitigen und einen kolbenstangenfernen Arbeitsraum 13; 15 unterteilt Konzentrisch zum Zylinder 3 ist ein Behälter 17 angeordnet, der mit seiner Innenseite einen Ausgleichsraum 19 begrenzt, der im Gegensatz zum Zylinder nur teilweise mit Dämpfmedium gefüllt ist.

In dem Gehäuse 11 ist ein Trennelement 21 axial beweglich gelagert. Dieses Trennelement 21 bestimmt die Größe von zwei sich gegenläufig sich verändernden Arbeitskammern 23; 25. Jede der Arbeitskammern 23; 25 verfügt über mindestens eine Öffnung 27; 29 zu einem der Arbeitsräume 13; 15 des Zylinders 3.

An dem Trennelement 21 sind Dämpfventile 31; 33 ausgeführt, die in beiden Bewegungsrichtungen des Trennelements eine Dämpfkraft erzeugen. Dafür verfügt das Trennelement über mindestens über Durchtrittskanal 35; 37 für jede Durchströmungsrichtung des Trennelements, wobei die Durchtrittskanäle 35; 37 in Ausströmrichtung von mindestens einer Ventilscheibe 39; 41 zumindest teilverschlossen wird.

Das Trennelement 21 und die Öffnungen 27; 29 im Gehäuse 11, die radial im Bereich des Verschiebewegs des Trennelements ausgeführt sind, bilden ein Schließventil in Schieberausführung.
In den Öffnungen 27; 29 und den Dämpfventilen 31; 33 im Trennelement verfügt das Gehäuse über jeweils ein Dämpfventil 43; 45 in Deckeln 47; 49. Jedes dieser weiteren Dämpfventile 43; 45 weist mindestens eine Durchlasskanal 51; 53 mit einer Ventilscheibenbestückung 55; 57 auf. Die Dämpfkraftcharakteristik der Dämpfventile 31; 33 im Trennelement 21 ist härter als die der weiteren Dämpfventile 43; 45 im Gehäuse. Des Weiteren weist das Gehäuse 11 mindestens ein in Einströmrichtung in das Gehäuses 11 sich öffnende Rückschlagventil 59; 61 auf.

Bei einer Kolbenstangenbewegung in Einfahrrichtung in den Zylinder 3 bewegt sich auch das Gehäuse 11 und komprimiert den kolbenstangenfernen Arbeitsraum 15. Das unter Druck stehende Dämpfmedium wirkt über die Öffnung 29 in der unteren Arbeitskammer 25 auf die Unterseite des Trennelements 21. Dadurch wird das Trennelement 21 in Richtung der Arbeitskammer 23 schoben und Dämpfmedium aus der Arbeitskammer 23 in den kolbenstangenseitigen Arbeitsraum 13 verdrängt. Dabei wird nur eine geringe Dämpfkraft erzeugt, da nur das Volumen der eintauchenden Kolbenstange 3 durch den Bodenventilkörper 7 in den Ausgleichsraum 19 verdrängt wird.

Ab einem bestimmten Hubweg der Kolbenstange 5 hat das Trennelement 21 die mindestens eine radiale Öffnung 27 im Gehäuse verschlossen. Bei weiterem Kolbenstangenhub wird zunehmend Dämpfmedium in die Arbeitskammer 25 gefördert, wodurch ein Druck an dem Trennelement 21 ansteht, der die obere Arbeitskammer 23 komprimiert. Unter dem Druck in der Arbeitskammer 23 öffnet das weitere Dämpfventil 45, wodurch eine erhöhte Dämpfkraft ansteht. Das Dämpfventil 31 im Trennelement ist noch geschlossen, da dieses Dämpfventil einen größeren Öffnungsdruck benötigt als das weitere Dämpfventil 45. Am Ende des maximalen Verschiebewegs des Trennelement 21 und fortgesetzter Kolbenstangenbewegung öffnet auch das Dämpfventil 31 im Trennelement 21, so dass dann Dämpfmedium über die Öffnung 29, durch das Dämpfventil 31 im Trennelement 21 und das weitere Dämpfventil 45 in den kolbenstangenseitigen Arbeitsraum 13 fließen kann, wobei nochmals eine Dämpfkraftsteigerung einsetzt.

Bei einer Umkehrung der Kolbenstangenbewegung, also in Ausfahrrichtung aus dem Zylinder 3, kann Dämpfmedium aus dem kolbenstangenseitigen Arbeitsraum 13 über das sich öffnende Rückschlagventil 61 in die obere Arbeitskammer 23 einströmen. Wenn die Mantelfläche des Trennelements die mindestens eine Öffnung 27 in Richtung des unteren Deckels 47 passiert hat, dann kann zusätzlich über die Öffnungen 27 Dämpfmedium in die obere Arbeitskammer 23 strömen. Bis zum Erreichen der Öffnungen 29 liegt in Ausfahrrichtung die minimale Dämpfkraft vor, da das in die obere Arbeitskammer 23 einströmende Dämpfmediumvolumen von der unteren Arbeitskammer 25 über die mindestens eine Öffnung 29 in den kolbenstangenfernen Arbeitsraum kompensiert werden kann. Bei weiterer Kolbenstangenausfahrbewegung wird die mindestens eine Öffnung 29 verschlossen, für das vom Trennelement 21 aus der unteren Arbeitskammer 25 verdrängte Dämpfmedium nur der Abfluss über das Dämpfventil 43 zur Verfügung steht, wodurch eine Dämpfkraftsteigerung bei unveränderter Kolbenstangengeschwindigkeit auftritt. Das Dämpfventil 31 im Trennelement bleibt noch verschlossen. Erst wenn das Trennelement bei weiterer Kolbenstangenausfahrbewegung sein Endposition am Deckel 47 erreicht hat, dann öffnet auch das Dämpfventil im Trennelement 21 und erzeugt eine nochmalige Dämpfkraftsteigerung, so dass für beide Kolbenstangenbewegungen eine dreistufige Dämpfkraftkennlinie vorliegt.

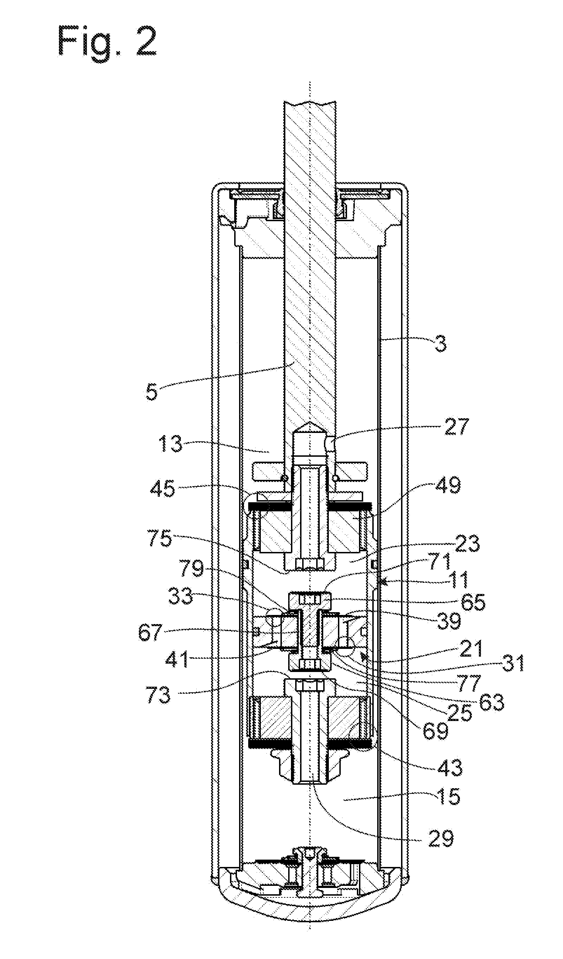

Die Variante nach Fig. 2 verfügt gleichfalls über eine amplitudenabhängige dreistufige Dämpfkraftkennlinie. Abweichend wird jedoch auf die Rückschlagventile 59; 61 zur Befüllung der Arbeitskammern 23; 25 verzichtet. Der wesentliche Unterschied besteht darin, dass das Trennelement 21 ein Ventilelement 63; 65 aufweist, das die Öffnung 25; 27 im Gehäuse 11 verschließt und dabei eine Relativbewegung des Ventilelements 63; 65 zum Trennelement 21 zulässt. Das Ventilelement 63; 65 von einem axial beweglichen Bolzen 67 gebildet, der sich beiderseits des Trennelements 21 erstreckt und die Ventilelemente 63; 65 trägt. Jedes Ventilelement 63; 65 verfügt über eine Topfform mit einer stirnseitigen Ventilfläche 69, 71. Dazu wird jede Öffnung 25; 27 von einer Ventilsitzfläche 73; 75 eingefasst.

Der Bolzen 67 bzw. die Ventilelement 63; 65 wird von zwei Druckfedern 77; 79 zum Trennelement gelagert. Diese Druckfedern 77, 79 spannen auch die Ventilscheiben 39; 41 auf das Trennelement 21 vor. Die maximale Abhubposition der Ventilscheiben 39; 41 wird jeweils von der Rückseite des Ventilelements bestimmt, an dem sich die Ventilscheiben abstützen.

Bei einer Kolbenstangeneinfahrbewegung ausgehend z. B. von der dargestellten Mittenposition des Trennelements 21, kann das dabei verdrängte Dämpfmedium aus dem kolbenstangenfernen Arbeitsraum 15 über die Öffnung 29 in die untere Arbeitskammer 25 einströmen. Das Trennelement wandert mit der Volumenvergrößerung der Arbeitskammer 25 in Richtung des Deckels 49, wobei sich das Volumen der oberen Arbeitskammer 23 verkleinert. Dämpfmedium wird aus der oberen Arbeitskammer 23 wird über die Öffnung 27 in den kolbenstangenseitigen Arbeitsraum 13 bewegt. Während dieser Kolbenstangenbewegung tritt wenn überhaupt, dann nur eine kleine Dämpfkraft auf.

Ab einer Hublage der Kolbenstange 5 und damit des Trennelements 21 kommt die Ventilfläche 71 des Ventilelements 65 auf der Ventilsitzfläche 75 zur Anlage und unterbindet damit den Abfluss von Dämpfmedium durch die Öffnung 27. Bei weiterer Kolbenstangenbewegung in Einfahrrichtung wird weiterhin Dämpfmedium in die untere Arbeitskammer 25 bewegt, so dass das Trennelement 21 weiter in Richtung des Deckels 49 gedrückt wird. Das Trennelement 21 kann sich gegen die Federkraft der Feder 79 relativ zum Ventilbolzen 67 verschieben, wodurch Dämpfmedium über das Ventil 45 am Deckel 49 bei gesteigerter Dämpfkraft in den kolbenstangenseitigen Arbeitsraum fließen kann. Wenn der Relativweg zwischen Trennelement 21 und Ventilbolzen 67 ausgeschöpft ist, dann liegt die Ventilscheibe 39 des Dämpfventils 33 an der Rückseite des Ventilelements 65 an. Bei einer weiteren Kolbenstangenbewegung muss das Dämpfmedium aus dem Arbeitsraum 15 über die untere Arbeitskammer 25, durch das geöffnete Dämpfventil 33, durch die minimal kleine Arbeitskammer 23 und durch das geöffnete Dämpfventil 45 in den kolbenstangenseitigen Arbeitsraum fließen. Dabei setzt die dritte Dämpfkraftstufe ein.

Wenn sich die Kolbenstangenbewegung ändert und die Kolbenstange ausfährt, dann kann das Dämpfmedium aus dem kolbenstangenseitigen Arbeitsraum durch die Öffnung 27 auf das Ventilelement 65 wirken, das ohne Verzögerung von der Ventilsitzfläche 75 abhebt und damit die drosselfreie Anbindung der oberen Arbeitskammer 23 an den kolbenstangenseitigen Arbeitsraum sicherstellt. Die weitere Kolbenstangenausfahrbewegung führt, da sowohl das Gehäuse wie auch das Trennelement einen funktional spiegelbildlichen Aufbau zur Querachse aufweisen, ebenfalls zu einer dreistufigen Dämpfkraftkennlinie, wobei die maximale Dämpfkraft erreicht wird, wenn die Stirnfläche 69 des Ventilelements 63 auf der Ventilsitzfläche 73 aufliegt und das gesamte Dämpfmedium aus dem kolbenstangenseitigen Arbeitsraum 13 durch die Öffnung 27, der oberen Arbeitkammer 23, dem Dämpfventil 31, und dem Dämpfventil 43 in den kolbenstangenfernen Arbeitsraum 15.

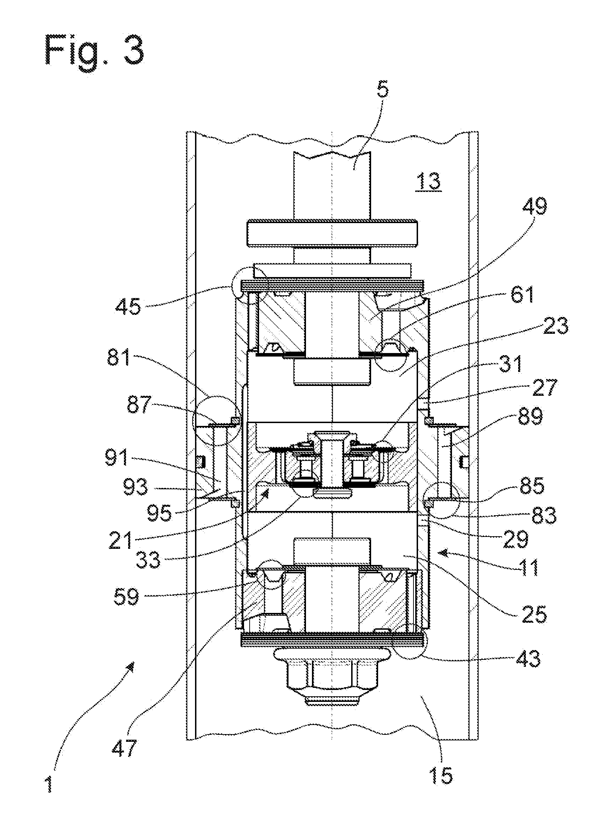

Die Fig. 3 zeigt einen Schwingungsdämpfer 1, in dem die gesamte Struktur aus der Fig. 1 enthalten ist. Zusätzlich ist dem Gehäuse 11 in einer parallelen Strömungsverbindung zu den Öffnungen 27; 29 im Gehäuse 11 ein drittes Dämpfventil 81, 83 parallel geschaltet, das ab einer definierten Kolbenstangengeschwindigkeit öffnet. Wenn der Volumenstrom durch die Dämpfventile 31; 33 im Trennelement 21 und die Dämpfventile 43; 45 am Gehäuse nicht mehr bewältigt wird, dann öffnet je nach Bewegungsrichtung der Kolbenstange 5, eines der Dämpfventil 81, 83; in dem mindestens eine Ventilscheibe 85; 87 mindestens eine Durchgangsöffnung 89; 91 in einem Ringsteg 93 des Gehäuses 11 freigibt und damit zusätzlich zu den drei Dämpfkraftstufen der Fig. 1 eine vierte Dämpfkraftstufe bewirkt.

In der Fig. 3 besteht zu dem Trennelement 21 ein Bypass (95), der auch bei einer geschlossenen Öffnung 27; 29 auf einem definierten Verschiebeweg des Trennelements 21 beide Arbeitskammern 23; 25 des Gehäuses 11 miteinander verbindet. Der Bypass 95 wird von mindestens einer Längsnut im Gehäuse 11 gebildet wird. Grundsätzlich ist der Bypass 95 auch sinnvoll in den Ausführungen nach den Fig. 1 oder 2 verwendbar.

Wenn eine der Öffnungen 27; 29 von dem Trennelement 21 verschlossen wird, dann wird die Arbeitskammer 25 bei einer Kolbenstangenbewegung in Richtung des Arbeitsraums 13 komprimiert. Ohne Bypass 95 würde das Dämpfmedium über die Öffnung 27 in die obere Arbeitskammer 23 einströmen und das Trennelement in Richtung des Dämpfventils 43 verschieben. Über das Dämpfventil 33 im Trennelement 21 würde kein Dämpfmediumstrom erfolgen, da das Dämpfventil 43 eine kleinere Öffnungskraft benötigt als das Dämpfventil 33 im Trennkolben.

Mit dem Bypass kann das Dämpfmedium jedoch auch bei verschlossener Öffnung 29 von der Arbeitskammer 23 in die Arbeitskammer 25 strömen. Die Abstimmung des Dämpfventils 33 im Verhältnis zum Dämpfventil 43 spielt dann keine Rolle, da das Dämpfmedium über den Bypass 95 weitgehend drosselfrei zwischen den Arbeitskammern 23, 25 fließen kann. Wenn das Trennelement 21 durch eine Axialbewegung den Bypass 95 verschlossen hat, wird in die Arbeitskammer 23 einströmende Volumen im gleichen Maß aus der Arbeitskammer 25 durch das Dämpfventil 23 in den Arbeitsraum 15 verdrängt. Hat das Trennelement 21 seine Endposition am Deckel 47 erreicht, dann fließt das gesamte Dämpfmedium durch das Gehäuse 11 und durchströmt die beiden Dämpfventile 33 und 43, wobei ab einer bestimmten Kolbenstangengeschwindigkeit das Dämpfventil 85 öffnet und zwei parallele Strömungswege zwischen den Arbeitsräumen 13; 15 zur Verfügung steht. Bei einer Einfahrbewegung der Kolbenstange stellt sich aufgrund der spiegelbildlichen Ausgestaltung der Ventile und des Gehäuses 11 ein gleichartiges Betriebsverhalten ein.

## Patentansprüche

1. Schwingungsdämpfer (1) mit amplitudenabhängiger Dämpfkraft, umfassend einen Zylinder (3), in dem eine Kolbenstange (5) axial beweglich angeordnet ist, an der ein Gehäuse (11) angebracht ist, das zwei dämpfmediumgefüllte Arbeitsräume (13; 15) trennt, wobei in dem Gehäuse (11) zwei sich in ihrer Größe gegenläufig sich verändernden Arbeitskammern (23; 25) durch ein axial bewegliches Trennelement (21) bestimmt werden, an dem Dämpfventile (31; 33) ausgeführt sind, die in beiden Bewegungsrichtungen des Trennelements (21) eine Dämpfkraft erzeugen, wobei die Arbeitskammern (23; 25) jeweils mindestens eine Öffnung (27; 29) zum einem Arbeitsraum (13; 15) aufweisen,
**dadurch gekennzeichnet,**
**dass** das Trennelement (21) die Öffnungen (27; 29) als Schließventil ansteuert und mindestens eine Arbeitskammer (23; 25) im Gehäuse (11) ein weiteres Dämpfventil (43; 45) aufweist, wobei in einem ersten Kolbenstangenhubbereich aus einem Arbeitsraum (13; 15) Dämpfmedium in eine Arbeitskammer (23; 25) verdrängt und **dadurch** das Trennelement (21) axial verschoben wird, wobei aus der anderen Arbeitskammer (23; 25) Dämpfmedium in den daran angeschlossenen Arbeitsraum (13; 15) verdrängt wird, wobei das Schließventil (21; 27; 29) am Ende des ersten Kolbenstangenhubbereiches verschlossen wird, und bei einem weiteren Kolbenstangenhub das weitere Dämpfventil (43; 45) aufgrund der weiteren axialen Bewegung des Trennelements (21) und der damit verbundenen Verdrängung von Dämpfmedium aus der Arbeitskammer (23; 25) in den Arbeitsraum (13; 15) öffnet und am Ende des maximalen Verschiebeweges des Trennelementes (21) und fortgesetzter Kolbenstangenbewegung Dämpfmedium aus einem Arbeitsraum (13; 15) über die angeschlossene Arbeitskammer (23; 25) durch ein Dämpfventil (31; 33) des Trennelements (21) in die andere Arbeitskammer (23; 25) und im weiteren Strömungsweg über das geöffnete weitere Dämpfventil (43; 45) in den anderen Arbeitsraum (13; 15) fließt.

2. Schwingungsdämpfer nach Anspruch 1,
**dadurch gekennzeichnet,**
**dass** der Schwingungsdämpfer (1) in Einfahr- und Ausfahrrichtung eine amplitudenabhängige Dämpfkraft aufweist.

3. Schwingungsdämpfer nach Anspruch 2,
**dadurch gekennzeichnet,**
**dass** die Öffnung (27; 29) radial im Gehäuse (11) im Bereich des Verschiebewegs des Trennelements (21) ausgeführt ist.

4. Schwingungsdämpfer nach Anspruch 1,
**dadurch gekennzeichnet,**
**dass** das weitere Dämpfventil (43; 45) mindestens einen Durchlasskanal (51; 53) mit einer Ventilscheibenbestückung (55; 57) aufweist.

5. Schwingungsdämpfer nach Anspruch 4,
**dadurch gekennzeichnet,**
**dass** die Dämpfventile (31; 33) im Trennelement (21) mindestens einen Durchtrittskanal (35; 37) mit mindestens einer den Durchtrittskanal (35; 37) in Ausströmrichtung zumindest teilverschließende Ventilscheibe (39; 41) umfassen, wobei die Dämpfventile (31; 33) im Trennelement (21) eine härtere Dämpfkraftcharakteristik aufweisen als das weitere Dämpfventil (43; 45) im Gehäuse (11).

6. Schwingungsdämpfer nach Anspruch 1,
**dadurch gekennzeichnet,**
**dass** das weitere Dämpfventil (43; 45) im Gehäuse (11) von einem Deckel (47; 49) des Gehäuses (11) gebildet wird.

7. Schwingungsdämpfer nach Anspruch 1,
**dadurch gekennzeichnet,**
**dass** das Gehäuse (11) mindestens ein in Einströmrichtung in das Gehäuse (11) sich öffnende Rückschlagventil (59; 61) aufweist.

8. Schwingungsdämpfer nach Anspruch 1,
**dadurch gekennzeichnet,**
**dass** das Trennelement (21) ein Ventilelement (63; 65) aufweist, das die Öffnung (27; 29) im Gehäuse (11) verschließt und eine Relativbewegung des Ventilelements (63; 65) zum Trennelement (21) zulässt.

9. Schwingungsdämpfer nach Anspruch 8,
**dadurch gekennzeichnet,**
**dass** das Ventilelement (63; 65) von einem axial beweglichen Ventilbolzen (67) gebildet wird.

10. Schwingungsdämpfer nach Anspruch 9
**dadurch gekennzeichnet,**
**dass** der Ventilbolzen (67) federnd zum Trennelement (21) gelagert ist.

11. Schwingungsdämpfer nach Anspruch 8,
**dadurch gekennzeichnet,**
**dass** sich beiderseits des Trennelements (21) ein Ventilelement (63; 65) erstreckt.

12. Schwingungsdämpfer nach den Ansprüchen 5 und 8,
**dadurch gekennzeichnet,**
**dass** sich die Ventilscheibe (39; 41) des Trennelements (21) an einer Rückseite des Ventilelements (63; 65) abstützt.

13. Schwingungsdämpfer nach Anspruch 1,
**dadurch gekennzeichnet,**
**dass** dem Gehäuse (11) in einer parallelen Strömungsverbindung zwischen den Arbeitsräumen (13; 15) zu den Öffnungen (27; 29) im Gehäuse (11) ein drittes Dämpfventil (81; 83) parallel geschaltet ist, das ab einer definierten Kolbenstangengeschwindigkeit öffnet.

14. Schwingungsdämpfer nach Anspruch 13,
**dadurch gekennzeichnet,**
**dass** das Gehäuse (11) einen Ringsteg (93) aufweist, in dem Durchgangsöffnungen (89; 91) mit Ventilscheiben (85; 87) das dritte Dämpfventil bilden.

15. Schwingungsdämpfer nach Anspruch 1,
**dadurch gekennzeichnet,**
**dass** zu dem Trennelement (21) ein Bypass (95) besteht, der auch bei einer geschlossenen Öffnung (27; 29) auf einem definierten Verschiebeweg des Trennelements (21) beide Arbeitskammern (23; 25) des Gehäuses (11) miteinander verbindet.

16. Schwingungsdämpfer nach Anspruch 15,
**dadurch gekennzeichnet,**
**dass** der Bypass (95) von mindestens einer Längsnut im Gehäuse (11) gebildet wird.
